# FASCICULE DE BREVET EUROPEEN

(11) **EP 0 593 686 B1**
(45) Date de publication et mention de la délivrance du brevet: **08.11.1995**
(21) Numéro de dépôt: 92919203.7
(22) Date de dépôt: 25.08.1992
(51) Int. Cl.: H02M 7/48

(54) **PROCEDE DE REGULATION D'UN ONDULEUR DE TENSION FONCTIONNANT EN QUASI-RESONANCE**
STEUERVERFAHREN FUER EIN QUASIRESONANTER SPANNUNGS-WECHSELRICHTER
METHOD OF REGULATING A QUASI-RESONANT VOLTAGE INVERTER

(30) Priorité: 26.08.1991 FR 9110607
(43) Date de publication de la demande: 27.04.1994
(73) Titulaire: ELECTRICITE DE FRANCE Service National, 75008 Paris (FR)
(72) Inventeur: POULIQUEN, Hervé, F-92140 Clamart (FR); KHALED, Elloumi, F-92140 Clamart (FR)
(74) Mandataire: Obolensky, Michel
(86) Numéro de dépôt international: FR9200822
(87) Numéro de publication internationale: WO9304525

(56) Documents cités:
- PATENT ABSTRACTS OF JAPAN vol. 14, no. 125 (E-900) 8 Mars 1990 & JP-1318547
- IEEE TRANSACTIONS ON APPLICATIONS AND INDUSTRY. vol. 25, no. 4, August 1989, NEW YORK US pages 634 - 643 DIVAN & SKIBINSKI 'Zero-Switching-Loss Inverters for High-Power Applications'
- CONF REC IEEE INDUSTRY APLLICATIONS SOCIETY ANNUAL MEETING vol. II, October 1990, SEATTLE WASHINGTON US pages 984 - 990 VENKATARAMANAN & DIVAN 'Pulse With Modulation with Resonant DC Link Converters'
- CONF REC IEEE INDUSTRY APLLICATIONS SOCIETY ANNUAL MEETING vol. I, October 1989, SAN DIEGO CALIFORNIA US pages 1037 - 1044 TENTI, DIVAN & TOIGO 'A Synchronized Resonant DC Link Converter for Soft-Switched PWM'
- PESC'87 RECORD 1987, BLACKSBURG, VIRGINIA, US pages 271 - 278 KHERALUWALA & DIVAN 'Delta Modulation Strategies for Resonant Link Inverters'

## Description

La présente invention concerne les onduleurs de tension fonctionnant en quasi-résonance.

Ces onduleurs sont alimentés par une source de tension continue, ils comportent un pont, monophasé ou polyphasé, à composants commandés fonctionnant en bloqué-saturé ; ces onduleurs comportent un circuit oscillant disposé du côté de l'alimentation en tension continue ; il est constitué d'une inductance en série avec la source de tension continue et d'un condensateur branché en parallèle sur le pont de redresseur commandé.

Le démarrage et le maintien des oscillations du circuit oscillant côté source de tension continue s'effectuent par des court-circuits successifs du condensateur, aux passges par zéro de la tension à ses bornes, c'est à dire à la fréquence de résonance du circuit oscillant. Ainsi, on emmagasine régulièrement dans l'inductance du circuit oscillant l'énergie nécessaire pour entretenir les oscillations. Les court-circuits sont assurés par la fermeture simultanée des deux interrupteurs de l'un des bras du pont.

De plus, selon le principe de la quasi-résonance, toute commutation de l'un quelconque des composants commandés du pont doit coïncider sensiblement avec le passage par zéro de la tension aux bornes du condensateur du circuit oscillant.

Des convertisseurs à résonance alimentés par une source de tension continue sont décrits dans l'article de CONF REC IEEE Industry Applications Society Annual Meeting, vol. II, Octobre 1990, Seattle Washington US, pages 984-990 de Venkataramanan & Divan ayant pour titre " Pulse Width Modulation with Resonant DC Link Converters " ainsi que dans l'article de CONF REC IEEE Industry Applications Society Annual Meeting, vol. I, Octobre 1989, San Diego California US, pages 1037-1044, de Tenti, Divan & Toigo intitulé " A synchronized Resonant DC Link Converter for Soft-Switched PWM".

JP-A-13 18 547 décrit par ailleurs un dispositif de commande de la commutation d'une source d'énergie comprenant un convertisseur du type à résonance, un circuit de commande de largeur d'impulsions, un circuit redresseur, un oscillateur, un circuit synchrone et un circuit à porte.

Les méthodes classiques de régulation adaptées aux onduleurs fonctionnant en quasi-résonance sont synchronisées sur la fréquence de résonance. C'est le cas de la modulation dite "Sigma-Delta" ; cette technique consiste à transformer un signal de référence continu en un signal à deux niveaux suivant une fréquence de synchronisation. En fait, on compare la sortie à une référence et l'erreur obtenue est passée à travers un intégrateur. La sortie de l'intégrateur est ensuite quantifiée en deux niveaux possibles, positif ou négatif, en fonction de sa polarité. La sortie du comparateur est appliquée à un circuit logique, échantillonné à la fréquence de résonance du circuit oscillant, pour produire les impulsions de commande de l'onduleur de tension. En aucun cas, cette méthode ne tient compte de la nature des pôles de la charge, ni des caractéristiques du modèle de l'onduleur fonctionnant dans le mode de quasi-résonance. Le seul degré de liberté pour atteindre les performances souhaitées est d'augmenter la fréquence d'échantillonnage, ce qui augmente notablement les pertes de commutation.

Il en résulte que les performances de ces onduleurs de tension fonctionnant en quasi-résonance sont limitées.

La présente invention a donc pour but de fournir un onduleur de tension fonctionnant en quasi-résonance dans lequel les pertes par commutation sont notablement diminuées et qui peut faire l'objet de régulations numériques performantes pour contrôler des charges diverses de l'onduleur.

A cet effet, l'invention telle que définie dans la revendication 1 a pour objet un procédé de régulation à modulation de largeur d'impulsion au moyen d'un régulateur numérique d'un onduleur de tension fonctionnant en quasi-résonance, comportant un pont de redresseurs commandés fonctionnant en bloqué-saturé et un circuit oscillant disposé du côté du courant continu et constitué d'une inductance en série avec la source de courant continu et d'un condensateur branché en parallèle sur le pont de redresseurs commandés, caractérisé en ce que la période d'échantillonnage du régulateur numérique est égale à environ une dizaine de fois ou plus la période de résonance du circuit oscillant.

Des modes préférentiels de réalisation sont présentés dans les revendication dépendantes 2 à 7.

L'invention permet de séparer la fonction de maintien, par des moyens analogiques, à haute fréquence des courts-circuit nécessaires à l'entretien de l'oscillation, de la fonction de régulation proprement dite. Ceci permet d'utiliser des régulateurs numériques fonctionnant à des fréquences plus faibles que la fréquence de résonance et qui peuvent prendre en compte les caractéristiques de la charge. L'invention permet donc d'associer les avantages propres à la résonance à haute fréquence à savoir la réduction de volume et le rendement, à ceux des commandes numériques, à savoir souplesse de traitement, adaptabilité et optimisation.

Les impulsions de tension imposées par la sortie de la régulation sont constituées par une série de périodes de sinusoïdes à la fréquence de résonance. Ces impulsions ne sont positionnées qu'à des instants discrets qui correspondent au passage par zéro de la tension aux bornes du condensateur qui se trouve en parallèle sur le pont.

Avantageusement, on dispose un écrêteur en parallèle sur ledit condensateur du circuit oscillant ; cet écrêteur limite la tension aux bornes du condensateur, lors des commutations, à une tension légèrement supérieure au double de la tension continue d'alimentation, E.

D'autres caractéristiques et avantages de l'invention ressortiront de la description qui suit d'exemples de réalisation de l'invention, faite en se référant aux dessins annexés sur lesquels :
- La figure 1 est le schéma d'un onduleur de tension classique fonctionnant en quasi-résonance ;
- la figure 2 illustre le principe du procédé selon l'invention ;

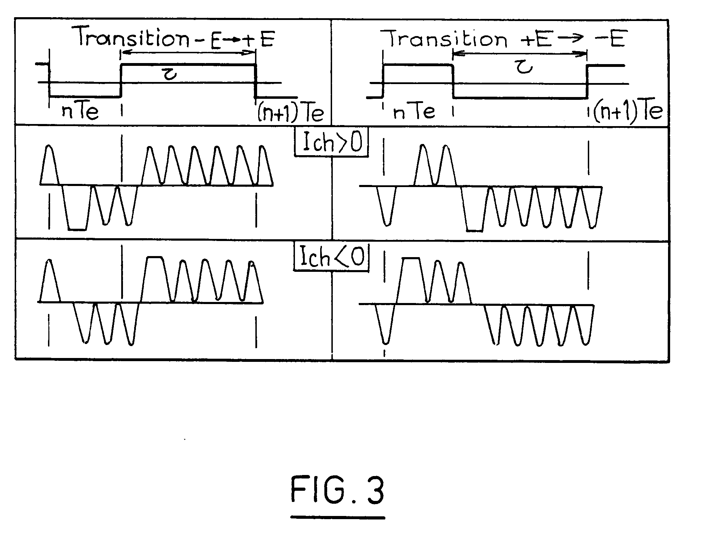

- la figure 3 est un tableau indiquant les formes de la tension en sortie de l'onduleur suivant les différentes commandes de transition ;
- la figure 4 est un diagramme de tension en sortie de l'onduleur ;
- la figure 5 représente un régulateur utilisé pour effectuer la régulation selon l'invention ; et
- la figure 6 est un diagramme de tension en sortie de l'onduleur.

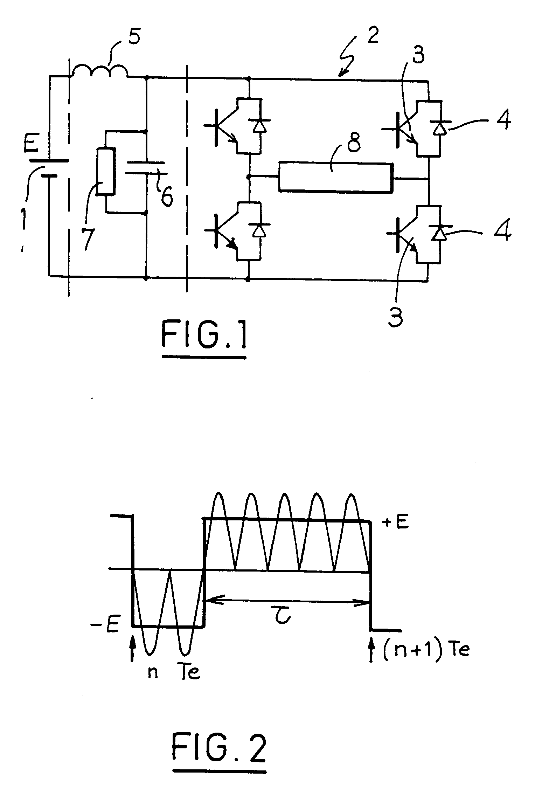

La figure 1 est le schéma d'un onduleur classique de tension fonctionnant en quasi-résonance. Une source de tension continue 1, de tension E, alimente un pont à composants commandés 3 fonctionnant en bloqué-saturé, c'est-à-dire à amorçage et extinction commandés ; une diode de roue libre 4 est disposée en parallèle sur chacun des composants commandés 3.

Le fonctionnement en quasi-résonance est obtenu grâce à un circuit oscillant disposé du côté tension continue ; il est constitué d'une inductance 5 en série avec la source de tension continue 1 et d'un condensateur 6 en parallèle sur le pont 2. La charge 8 qui doit être alimentée, par des ondes de tension de façon à être parcourue par un courant alternatif sinusoïdal, est disposée entre deux points situés entre les composants commandés sur chacun des bras de l'onduleur. De manière connue, un dispositif écrêteur 7, est branché en parallèle sur le condensateur 6. Cet écrêteur limite la tension aux bornes du condensateur à une valeur légèrement supérieure au double de la tension, E, de la source 1 de tension continue.

La figure 2 illustre le principe du procédé selon l'invention. La régulation du courant alternatif fournie par l'onduleur est réalisée par un procédé de modulation de largeur d'impulsion classique avec une période d'échantillonnage régulière Te très supérieure à et environ de l'ordre d'au moins une dizaine de fois ou plus la période du circuit résonant constitué par l'inductance 5 et le condensateur 6.

Ceci est schématisé sur la figure 2 qui représente le créneau de commande issu de la régulation et la forme idéale de la tension aux bornes de la charge 8 dans le procédé conforme à la présente invention. On voit que la régulation est effectuée par un procédé de modulation de largeur d'impulsion classique avec une seule commutation au cours de la période d'échantillonnage ; dans le cas présent il s'agit d'une commutation de la valeur -E (tension continue d'alimentation) à la valeur +E ; la commutation de +E à -E coïncide donc sensiblement avec la fin de la période d'échantillonnage. La durée τ de l'impulsion de la commande par modulation de largeur d'impulsion correspond aux demi-ondes positives à la fréquence de résonance.

La figure 2 représente la forme théorique de la tension aux bornes de la charge 8. Les déformations par rapport à cette forme théorique sont dues au phénomène de commutation. La modélisation du système nécessite avant tout une uniformisation de la forme d'onde pendant une période d'échantillonnage Te.

Le tableau 3 représente les différents cas possibles d'affectation de la commande de commutation selon que l'impulsion est alignée à gauche ou à droite et selon que le courant de la charge Ich est positif ou négatif.

L'élément le plus gênant est la commutation qui provoque une surtension aux bornes du condensateur, surtension qui est écrêtée par le dispositif d'écrêtage cité ci-dessus. Si l'on choisit un type de commande pour lequel la commutation de commande de modulation de largeur d'impulsion, c'est-à-dire la commutation prévue au cours de l'intervalle d'échantillonnage, passe de -E à +E pour un courant de charge Ich, positif, et la commutation prévue au cours de l'intervalle d'échantillonnage passe de +E à -E pour un courant Ich négatif, alors, le phénomène d'écrêtage se situe toujours au début de la période d'échantillonnage.

Par conséquent, les différents temps de commutation T1 et T2, en particulier celui correspondant à la commutation, qui provoque une surtension aux bornes du condensateur, surtension qui est écrêtée comme indiqué ci-dessus, sont facilement calculables. En effet, ceux-ci dépendent du courant dans la charge, qui est une grandeur variable dans le temps, et qui est facilement mesurable à l'instant précis d'échantillonnage. Ce calcul est, en effet, nécessaire pour obtenir la largeur d'impulsion τ de façon précise. Le temps T2 est grand si le courant de charge est élevé.

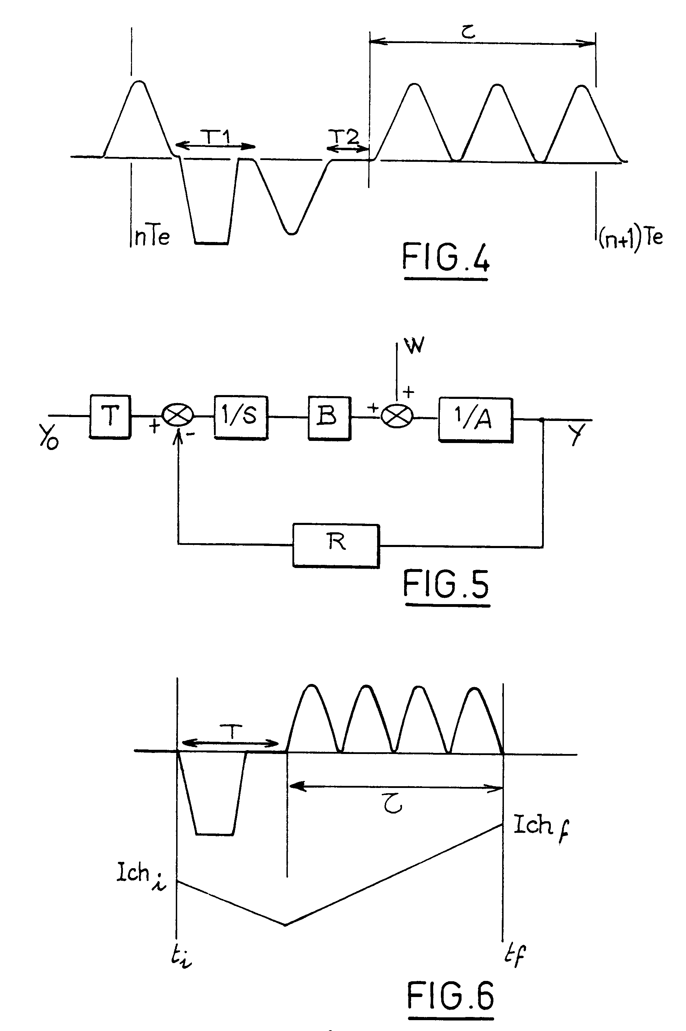

La figure 4 montre la forme réelle de la tension aux bornes de la charge 8 du circuit alternatif pour un courant de charge Ich positif. On voit que l'onde de forme trapézoïdale qui correspond au phénomène d'écrêtage se trouve au début de la période d'échantillonnage Te.

La figure 5 représente un régulateur utilisé pour effectuer la régulation numérique à modulation de largeur d'impulsion selon l'invention. Il s'agit d'un régulateur de type RST classique, Yo étant la consigne, Y la grandeur à contrôler, ici le courant dans la charge. Les paramètres du régulateur sont choisis pour que le système soit à temps de réponse fini minimum. Le régulateur comporte un intégrateur afin d'assurer une erreur nulle en régime permanent. On cherche aussi à le régler pour qu'il soit robuste vis-à-vis de perturbations éventuelles.

La figure 6 représente la forme d'onde aux bornes de la charge 8 du circuit alternatif conformément à une variante de l'invention. Il s'agit d'un modèle auto-récurrent à période d'échantillonnage de durée variable. L'idée de la méthode auto-récurrente est de fixer au début de cette période une quantité bien déterminée d'énergie, elle est négative si le courant de charge est positif et positive si le courant de charge est négatif, et de laisser au système le temps de compenser cette énergie et d'atteindre la référence de régulation. La fin de la période d'échantillonnage dépend ainsi de la durée, τ, de l'impulsion de commande en modulation de largeur d'impulsion.

Comme on peut le voir sur la figure 6, la quantité d'énergie à compenser, qui est attribuée à chaque début de période, correspond à une seule arche sinusoïdale à la fréquence de résonance et, par conséquent, du fait du choix qui a été indiqué plus haut, à la période au cours de laquelle l'écrêtage de la tension aux bornes du condensateur se produit.

Cette dernière méthode élimine les incertitudes de placement de la transition prévue au cours de l'intervalle d'échantillonnage.

Des essais ont montré que ce dispositif de régulation à périodes d'échantillonnage de durée variable permet de contrôler encore mieux la forme d'onde du courant de charge en minimisant les harmoniques basses fréquences indésirables. Les résultats obtenus avec cette variante de l'invention s'en retrouvent très fortement améliorés, le taux de distorsion harmonique du courant contrôlé, étant réduit de moitié par rapport au cas précédent selon l'invention.

Si l'on compare les résultats obtenus grâce au procédé selon l'invention par rapport à un procédé de régulation classique, par exemple du type Sigma-Delta, on s'aperçoit que les performances obtenues en régime statique sont équivalentes ; par contre, conformément à la présente invention, la fréquence de commande de la régulation en modulation de largeur d'impulsion est bien plus faible, ce qui entraîne une diminution notable des pertes par commutation et ce qui permet d'utiliser des correcteurs ou régulateurs numériques, donc d'améliorer les performances.

L'invention peut s'appliquer en particulier pour l'alimentation de moteurs électriques à vitesse variable, pour des alimentations sans interruption, etc.

## Revendications

1. Procédé de régulation à modulation de largeur d'impulsion au moyen d'un régulateur numérique d'un onduleur de tension fonctionnant en quasi-résonance, comportant un pont (2) de redresseurs commandés (3) fonctionnant en bloqué-saturé et un circuit oscillant (5,6) disposé du côté du courant continu et constitué d'une inductance (5) en série avec la source (1) de courant continu et d'un condensateur (6) branché en parallèle sur le pont (2) de redresseurs commandés (3), caractérisé en ce que la période d'échantillonnage (Te) du régulateur numérique est égale à environ une dizaine de fois ou plus la période de résonance du circuit oscillant.

2. Procédé de régulation d'un onduleur de tension fonctionnant en quasi-résonance selon la revendication 1, caractérisé en ce que l'on dispose un écrêteur (7) en parallèle sur le condensateur (6) du circuit oscillant (5,6), ledit écrêteur (7) limitant la tension aux bornes dudit condensateur (6) à une tension légèrement supérieure au double de la tension continue (E) d'alimentation.

3. Procédé de régulation d'un onduleur de tension fonctionnant en quasi-résonance selon la revendication 1 ou 2, caractérisé en ce que l'impulsion de commutation aux bornes de la charge du pont à composants commandés est calée sur le début ou la fin d'une onde de la fréquence de résonance.

4. Procédé de régulation d'un onduleur de tension fonctionnant en quasi-résonance selon l'une quelconque des revendications 1 à 3, caractérisé en ce que la commutation prévue dans chaque période d'échantillonnage passe d'une valeur (-E) à la valeur (+E) pour un courant de charge (Ich) positif et de la valeur (+E) à la valeur (-E) pour un courant de charge négatif.

5. Procédé de régulation d'un onduleur de tension fonctionnant en quasi-résonance selon l'une quelconque des revendications 1 à 4, caractérisé en ce que l'impulsion de commande issue de la régulation est calée sur le début ou sur la fin de la période d'échantillonnage.

6. Procédé de régulation d'un onduleur de tension fonctionnant en quasi-résonance selon l'une quelconque des revendications 1 à 5, caractérisé en ce que l'on utilise un régulateur de type (RST) pour le contrôle du courant de la charge et dont la sortie est la largeur d'impulsion.

7. Procédé de régulation d'un onduleur de tension fonctionnant en quasi-résonance selon l'une quelconque des revendications 1 à 6, caractérisé en ce que les périodes d'échantillonnage sont de durée variable et que chaque période d'échantillonnage commence par une seule période de la tension aux bornes du condensateur à la fréquence de résonance suivie d'un nombre variable de périodes de la tension aux bornes du condensateur à la fréquence de résonance mais avec une polarité de la tension opposée.

## Patentansprüche

1. Steuerverfahren zur Modulation der Impulsgröße mit Hilfe eines numerischen Reglers eines quasiresonanten Spannungswechselrichters mit einer Brücke (2) von gesteuerten Gleichrichtern (3), die bei Sättigung sperren, und einem Schwingkreis (5, 6), der benachbart zur Gleichstromquelle angeordnet ist und aus einer Induktanz (5), die mit der Gleichstromquelle (1) in Reihe geschaltet ist, und einem Kondensator (6) besteht, welcher parallel zur Brücke (2) der gesteuerten Gleichrichter (3) geschaltet ist, dadurch gekennzeichnet, daß die Samplingperiode (Te) des numerischen Reglers etwa dem Zehnfachen oder mehr der Resonanzperiode des Schwingkreises entspricht.

2. Steuerverfahren eines quasiresonanten Spannungswechselrichters nach Anspruch 1, dadurch gekennzeichnet, daß man einen Begrenzer (7) parallel zum Kondensator (6) des Schwingkreises (5,6) anordnet, der die an den Klemmen des Kondensators (6) liegende Spannung auf eine Spannung begrenzt, die geringfügig größer ist als die doppelte Gleichstromversorgungsspannung (E).

3. Steuerverfahren eines quasiresonanten Spannungswechselrichters nach Anspruch 1 oder 2, dadurch gekennzeichnet, daß der Schaltimpuls an den Ladeklemmen der Brücke von gesteuerten Bauteilen am Anfang oder am Ende einer Welle der Resonanzfrequenz blockiert wird.

4. Steuerverfahren eines quasiresonanten Spannungswechselrichters nach einem der Ansprüche 1 bis 3, dadurch gekennzeichnet, daß der in jeder Samplingperiode stattfindende Umschaltvorgang einen Übergang von einem Wert (-E) bis zu einem Wert (+E) für einen positiven Ladestrom (Ich) und einen Übergang von dem Wert (+E) auf den Wert (-E) für einen negativen Ladestrom bewirkt.

5. Steuerverfahren eines quasiresonanten Spannungswechselrichters nach einem der Ansprüche 1 bis 4, dadurch gekennzeichnet, daß der von der Steuerung abgegebene Steuerimpuls am Anfang oder am Ende der Samplingperiode blockiert wird.

6. Steuerverfahren eines quasiresonanten Spannungswechselrichters nach einem der Ansprüche 1 bis 5, dadurch gekennzeichnet, daß man einen Regler eines Typs (RST) für die Steuerung des Ladestromes verwendet, dessen Ausgangssignal der Impulsgröße entspricht.

7. Steuerverfahren eines quasiresonanten Spannungswechselrichters nach einem der Ansprüche 1 bis 6, dadurch gekennzeichnet, daß die Samplingperioden eine veränderliche Dauer besitzen und daß jede Samplingperiode durch eine einzige Spannungsperiode an den Kondensatorklemmen mit Resonanzfrequenz beginnt, welcher eine veränderliche Zahl von Spannungsperioden an Klemmen des Kondensators mit Resonanzfrequenz, jedoch mit einer entgegengesetzten Polarität der Spannung, folgt.

## Claims

1. Method of pulse-width modulation regulation, by means of a digital regulator, of a voltage inverter operating in quasi-resonance, including a bridge (2) of controlled rectifiers (3), operating in turned off-saturated mode, and an oscillating circuit (5, 6) arranged on the DC current side and consisting of an inductor (5) in series with the DC current source (1) and of a capacitor (6) connected in parallel with the controlled-rectifier (3) bridge (2), characterized in that the sampling period (Te) of the digital regulator is equal to about ten or more times the resonance period of the oscillating circuit.

2. Method of regulating a voltage inverter operating in quasi-resonance according to Claim 1, characterized in that a peak limiter (7) is arranged in parallel with the capacitor (6) of the oscillating circuit (5, 6), the said peak limiter (7) limiting the voltage at the terminals of the said capacitor (6) to a voltage slightly higher than twice the DC power supply voltage (E).

3. Method of regulating a voltage inverter operating in quasi-resonance according to Claim 1 or 2, characterized in that the switching pulse at the terminals of the load of the bridge with controlled components is set to the start or the end of a wave with the resonance frequency.

4. Method of regulating a voltage inverter operating in quasi-resonance according to any one of Claims 1 to 3, characterized in that the switching expected in each sampling period passes from a value (-E) to the value (+E) for a positive load current (Ich) and from the value (+E) to the value (-E) for a negative load current.

5. Method of regulating a voltage inverter operating in quasi-resonance according to any one of Claims 1 to 4, characterized in that the control pulse output by the regulation is set to the start or to the end of the sampling period.

6. Method of regulating a voltage-inverter operating in quasi-resonance according to any one of Claims 1 to 5, characterized in that a regulator of (RST) type is used for controlling the current in the load, and the output of which is the pulse width.

7. Method of regulating a voltage inverter operating in quasi-resonance according to any one of Claims 1 to 6, characterized in that the sampling periods are of variable duration and that each sampling period starts with a single period of the voltage at the terminals of the capacitor at the resonance frequency, followed by a variable number of periods of the voltage at the terminals of the capacitor at the resonance frequency but with the voltage having opposite polarity.
